# EUROPÄISCHE PATENTSCHRIFT

(11) **EP 3 337 968 B1**
(45) Veröffentlichungstag und Bekanntmachung des Hinweises auf die Patenterteilung: **14.10.2020**
(21) Anmeldenummer: 16754248.9
(22) Anmeldetag: 11.08.2016
(51) Int. Cl.: F02F 3/22, B22F 3/105

(54) **STAHL- ODER ALUMINIUMKOLBEN FÜR EINEN VERBRENNUNGSMOTOR SOWIE VERFAHREN ZUR HERSTELLUNG ZUMINDEST EINES TEILS EINES STAHL- ODER ALUMINIUMKOLBENS FÜR EINEN VERBRENNUNGSMOTOR**
STEEL OR ALUMINIUM PISTON FOR A COMBUSTION ENGINE, AS WELL AS METHOD FOR PRODUCING AT LEAST ONE PART OF A STEEL OR ALUMINIUM PISTON FOR A COMBUSTION ENGINE
PISTON ACIER OU ALUMINIUM POUR MOTEUR À COMBUSTION INTERNE ET PROCÉDÉ DE FABRICATION D'AU MOINS UNE PARTIE D'UN PISTON ACIER OU ALUMINIUM POUR MOTEUR À COMBUSTION INTERNE

(30) Priorität: 19.08.2015 DE 102015215803
(43) Veröffentlichungstag der Anmeldung: 27.06.2018
(73) Patentinhaber: Federal-Mogul Nürnberg GmbH, 90441 Nürnberg (DE)
(72) Erfinder: WEISS, Rainer, 90469 Nürnberg (DE); UNGERMANN, Sven, 90403 Nürnberg (DE)
(74) Vertreter: Hoffmann Eitle
(86) Internationale Anmeldenummer: PCT/EP2016/069122
(87) Internationale Veröffentlichungsnummer: WO 2017/029186

(56) Entgegenhaltungen:
- EP-A2- 2 348 207
- DE-A1- 19 926 568
- DE-A1-102009 013 201
- DE-A1-102011 006 409
- US-A1- 2003 196 547
- US-A1- 2014 102 294
- US-A1- 2014 299 091
- US-B1- 7 299 772

## Beschreibung

### TECHNISCHES GEBIET

Die Erfindung betrifft einen Stahl- oder Aluminiumkolben für einen Verbrennungsmotor sowie ein Verfahren zur Herstellung zumindest eines Teils eines Stahl- oder Aluminiumkolbens für einen Verbrennungsmotor.

Kolben von Verbrennungsmotoren begrenzen den Brennraum und sind infolge dessen sowohl sehr hohen Temperaturen als auch mechanischen Belastungen ausgesetzt. Um die Wärme aus dem Kolben abzuführen sind in dem Kolben üblicherweise ein oder mehrere, zumeist ringförmige Kühlkanäle ausgebildet, in die Kühlöl eingespritzt wird, das Wärme aufnimmt und den Kühlkanal an anderer Stelle wieder verlässt.

### STAND DER TECHNIK

In diesem Zusammenhang beschreibt beispielsweise die WO 2014/059221 A1 einen Kühlkanal, in den Rippen hineinragen.

Weitere Kolben mit sich im Kühlkanal erstreckenden Kühlstrukturen sind aus EP2348207, DE19926568 oder US7299772 bekannt.

Ferner geht aus der DE 10 2010 046 468 A1, DE 10 2013 205 244 A1 und DE 10 2006 049 216 A1 jeweils ein generatives Herstellverfahren unter Verwendung eines Metallpulvers hervor.

### DARSTELLUNG DER ERFINDUNG

Vor diesem Hintergrund liegt der Erfindung die Aufgabe zugrunde, einen Stahl- oder Aluminiumkolben für einen Verbrennungsmotor zu schaffen, der eine verbesserte Kühlkanalgestaltung aufweist und effizient hergestellt werden kann. Ferner soll ein entsprechendes Herstellungsverfahren vorgestellt werden.

Die Lösung dieser Aufgabe erfolgt zum einen durch den in Anspruch 1 beschriebenen Kolben mit zumindest einem Kühlkanal, in dem sich sowohl in im Wesentlichen Kolbenachsrichtung als auch in im Wesentlichen radialer Richtung Zapfen erstrecken. Derartige Zapfen, die auch als Noppen oder an ihrem Fuß und/oder an ihrer Spitze abgerundete, vorstehende Zylinder beschrieben werden können, erhöhen in vorteilhafter Weise die wärmeübertragende Oberfläche und können darüber hinaus zur Stabilisierung des Kolbens in dem Kühlkanal genutzt werden. Die Ausbildung derartiger, im Wesentlichen senkrecht zueinander verlaufender Zapfen ist durch die erfindungsgemäße Verwendung eines additiven oder generativen Fertigungsverfahrens möglich und führt zu den bereits beschriebenen Vorteilen.

Zu den vorangehend und nachfolgend beschriebenen Zapfen sei erwähnt, dass sie lediglich als Beispiel für eine Struktur dienen sollen, die mittels des erfindungsgemäßen Verfahrens herstellbar ist, während dies mit konventionellen Fertigungsverfahren nicht oder nur mit erheblich höheren Kosten möglich ist. Zusätzlich zu den Zapfen sind beispielsweise Wellen, Verdickungen und/oder Verjüngungen möglich. Die Wellen betreffen bevorzugt die obere und/oder untere Begrenzung des Kühlkanals. Verdickungen bedeuten bevorzugt Querschnittsvergrößerungen oder -erweiterungen des Kühlkanals, die bevorzugt stellenweise vorgesehen sein können. Entsprechendes gilt für die Verjüngungen des Querschnitts des Kühlkanals.

Bevorzugt wird derzeit, dass sich die in Kolbenachsrichtung und in radialer Richtung erstreckenden Zapfen kreuzen, so dass im Wesentlichen eine kreuzförmige Gestaltung entsteht. Hierbei kreuzen sich bevorzugt auch die Mittelachsen der Zapfen.

Ferner erstrecken sich die in radialer Richtung verlaufenden Zapfen bevorzugt von einer Kühlkanalbegrenzung zur anderen. Hierdurch kann in vorteilhafter Weise eine Abstützung in radialer Richtung erfolgen. Für die in Kolbenachsrichtung verlaufenden Zapfen wird bevorzugt, dass sie sich von dem Boden des Kühlkanals, der weiter von dem Kolbenboden entfernt ist, als die Oberseite des Kühlkanals, erstrecken, jedoch die Oberseite des Kühlkanals nicht erreichen.

Die Lösung der oben genannten Aufgabe erfolgt ferner durch das im Anspruch 7 beschriebene Verfahren.

Demzufolge wird zumindest ein Teil eines Stahl- oder Aluminiumkolbens für einen Verbrennungsmotor mittels eines additiven oder generativen Fertigungsverfahren hergestellt. Als Beispiele seien bereits an dieser Stelle 3D-Druck-, selektive Metall-Laserschmelz- und -sinterverfahren genannt. Des Weiteren darf auf den oben diesbezüglich genannten Stand der Technik sowie auf DE112005002040 B4, DE102004042775 B4, DE102010026000 A1, US7942987 B2, EP1163999 B1, US6504127 B1, DE102004008122 B4, DE102006038858 A1, US5387380 A und US6676892 B2 verwiesen werden, deren Offenbarung zum Gegenstand der Anmeldung gemacht wird.

Es sei erwähnt, dass mittels des erfindungsgemäßen additiven oder generativen Fertigungsverfahrens ein Kolbenrohling oder ein Teil davon hergestellt wird, der/das gegebenenfalls nach dem Verbinden mit weiteren Teilen des Kolbens, in gewohnter Weise fertigbearbeitet wird. Unter einem Aluminiumkolben wird auch ein Kolben aus einer Aluminiumlegierung verstanden.

Additive oder generative Fertigungsverfahren werden im Rahmen der Erfindung zur Herstellung von Kolben für Verbrennungsmotoren vorgeschlagen und bieten den wesentlichen Vorteil, dass bislang nicht herstellbare Formen erzeugt werden können. Dies kann, wie nachfolgend genauer ausgeführt, beispielsweise im Rahmen der Gestalt der Kühlkanalgeometrie dadurch genutzt werden, dass im Wesentlichen frei gestaltbar die Wärme abgebende Oberfläche vergrößert wird, so dass der Wärmeübergang zu dem Kühlöl verbessert, und die Wärmeabfuhr aus dem Kolben ebenfalls verbessert wird. Somit sind Kühlkanalformen effizient herstellbar, die bislang aufgrund ihrer Komplexität nur schwer oder mit unverhältnismäßig hohem Aufwand und/oder Kosten durch Gießen und/oder durch mechanische Bearbeitung herstellbar waren. Beim Gießen betrifft dies beispielsweise solche Formen des Kühlkanals, die beispielsweise Hinterschnitte aufweisen, so dass die notwendigen, verlorenen Sand- oder Salzkerne eine entsprechende Form aufweisen müssen, deren Herstellung bereits mit erhöhtem Aufwand und/oder Kosten verbunden ist.

Dementsprechend wird im Rahmen der Erfindung bevorzugt, dass der- oder dasjenige Teil des Stahl- oder Aluminiumkolbens, der oder das zumindest teilweise den Kühlkanal bildet, mittels des erfindungsgemäßen Verfahrens hergestellt wird. Dieses kann beispielsweise auf das oder den andere(n) Teil des Kolbens aufgesetzt und mit diesem durch Reib- oder Induktionsschweißen verbunden werden. Sofern ein additives oder generatives Fertigungsverfahren mit höheren Kosten verbunden ist, können diese somit auf ein Teil des erfindungsgemäßen Stahl- oder Aluminiumkolbens beschränkt werden. Alternativ können die Kosten für die beschriebenen Verfahren zum Verbinden von Teilen eines Kolbens eingespart werden, wenn, wie im Rahmen der Erfindung bevorzugt, auf einen konventionell gefertigten, beispielsweise geschmiedeten oder gegossenen Kolben mittels des erfindungsgemäßen, additiven oder generativen Fertigungsverfahrens aufgebaut wird.

Bevorzugt wird in diesem Zusammenhang ferner, dass unterschiedliche Teile des Stahl- oder Aluminiumkolbens aus unterschiedlichen Stahl- bzw. Aluminiumwerkstoffen gefertigt werden, so dass die Eigenschaften des jeweiligen Teiles an die daran gestellten Anforderungen angepasst werden können. Dies betrifft beispielsweise die Festigkeit, die Zunderbeständigkeit, die Wärmeleitfähigkeit und dergleichen. In vorteilhafter Weise kann für den oder das jeweilige Teil ein Werkstoff gewählt werden, der die daran gestellten Anforderungen besonders gut erfüllt, so dass insgesamt ein verbesserter Kolben hergestellt werden kann.

Sämtliche vorangehend und nachfolgend im Zusammenhang mit dem erfindungsgemäßen Verfahren beschriebenen Merkmale sind auf den erfindungsgemäßen Stahl- oder Aluminiumkolben anwendbar und umgekehrt.

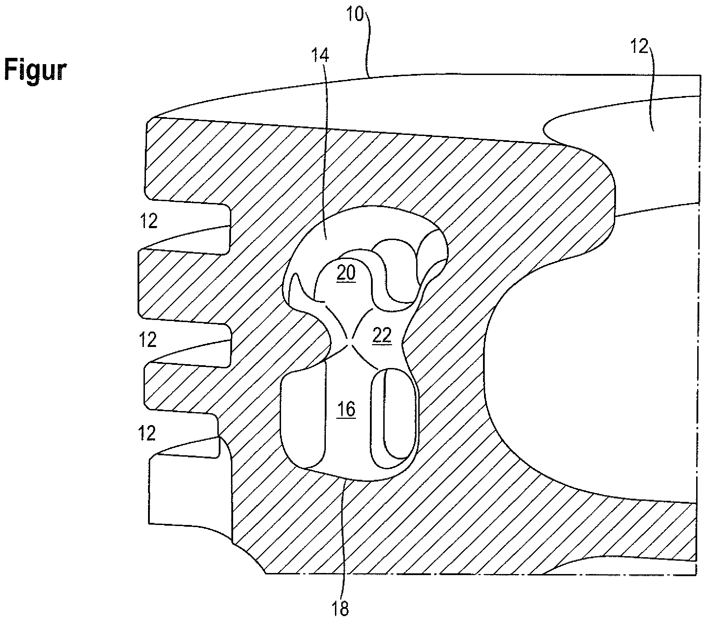

### KURZE BESCHREIBUNG DER ZEICHNUNG

Nachfolgend wird ein Ausführungsbeispiel der Erfindung näher erläutert.

Die Figur zeigt einen Schnitt durch einen Bereich des erfindungsgemäßen Stahl- oder Aluminiumkolbens, der einen Kühlkanal aufweist.

### AUSFÜHRLICHE BESCHREIBUNG EINES BEVORZUGTEN AUSFÜHRUNGSBEISPIELS DER ERFINDUNG

Wie in der Figur zu erkennen ist, weist der erfindungsgemäße Kolben einen Kolbenboden 10 auf, der den Brennraum begrenzt, und in dem eine Brennraummulde 12 ausgebildet ist. Unterhalb des Kolbenbodens 10 befinden sich Kolbenringnuten 12 sowie ein im Wesentlichen ringförmiger Kühlkanal 14. Erfindungsgemäß sind in dem Kühlkanal 14 zum einen Zapfen 16 ausgebildet, die im Wesentlichen in Richtung der Kolbenachse (in der Figur vertikal) verlaufen, und in dem gezeigten Fall sowohl an ihrem Übergang zum Boden 18 des Kühlkanals 14 als auch an ihrem oberen, freien Ende 20 verrundet sind. In dem gezeigten Fall weisen die im Wesentlichen zylindrischen Zapfen einen Durchmesser auf, der in etwa einem Drittel der Breite des Kühlkanals 14 (in radialer Richtung gemessen) entspricht. Ferner sind sie bei dem gezeigten Beispiel an dem Boden 18 ausgebildet und erstrecken sich nicht bis zur Oberseite des Kühlkanals 14.

Im Wesentlichen in radialer Richtung sind weitere Zapfen 22 vorgesehen, die zusammen mit den sich in Achsrichtung erstreckenden Zapfen 16 eine kreuzförmige Gestalt bilden, und sich im gezeigten Fall von der einen seitlichen Begrenzung des Kühlkanals 14 zur anderen erstrecken. Im Bereich des Übergangs zu den genannten Begrenzungen sind die Zapfen 22 verrundet. Dies gilt in gleicher Weise für den Übergang zu den in Kolbenachsrichtung verlaufenden Zapfen 16. Wenngleich dies in der Figur nicht dargestellt ist, könnte beispielsweise der- oder dasjenige Teil des Kolbens, das den in der Figur gezeigten Bereich mit vergleichsweise komplexen Gestaltungen aufweist, mittels eines additiven oder generativen Fertigungsverfahren hergestellt werden und mit einem zweiten Teil, das in anderer Weise hergestellt sein kann, verbunden werden.

## Patentansprüche

1. Stahl- oder Aluminiumkolben für einen Verbrennungsmotor mit zumindest einem Kühlkanal (14),
in dem sich sowohl im Wesentlichen in Kolbenachsrichtung, als auch in im Wesentlichen radialer Richtung Zapfen (16, 22) erstrecken.

2. Stahl- oder Aluminiumkolben nach Anspruch 1,
**dadurch gekennzeichnet, dass**
die sich in Kolbenachsrichtung erstreckenden Zapfen (16) und die in radialer Richtung erstreckenden Zapfen (22) kreuzen.

3. Stahl- oder Aluminiumkolben nach Anspruch 1 oder 2,
**dadurch gekennzeichnet, dass**
die sich in radialer Richtung erstreckenden Zapfen (22) von einer Begrenzung des Kühlkanals (14) zur anderen reichen.

4. Stahl- oder Aluminiumkolben nach einem der Ansprüche 1 bis 3,
**dadurch gekennzeichnet, dass**
die sich in Kolbenachsrichtung erstreckenden Zapfen lediglich von einem Boden (18) des Kühlkanals (14) erstrecken.

5. Stahl- oder Aluminiumkolben nach einem der vorangehenden Ansprüche,
**dadurch gekennzeichnet, dass**
die obere und/oder untere Begrenzung des Kühlkanals Wellen aufweist.

6. Stahl- oder Aluminiumkolben nach einem der vorangehenden Ansprüche,
**dadurch gekennzeichnet, dass**
der Querschnitt des Kühlkanals stellenweise vergrößert und/oder stellenweise verjüngt ist.

7. Verfahren zur Herstellung zumindest eines Teils eines Stahl- oder Aluminiumkolbens für einen Verbrennungsmotor mit zumindest einem Kühlkanal (14),in dem sich sowohl im Wesentlichen in Kolbenachsrichtung, als auch in im Wesentlichen radialer Richtung Zapfen (16, 22) erstrecken, mittels eines additiven oder generativen Fertigungsverfahrens.

8. Verfahren nach Anspruch 7,
**dadurch gekennzeichnet, dass**
der oder das Teil des Stahl- oder Aluminiumkolbens mittels 3D-Druck und/oder selektivem Metall-Laserschmelzen und/oder -Sintern hergestellt wird.

9. Verfahren nach Anspruch 7 oder 8,
**dadurch gekennzeichnet, dass**
der oder das Teil des Stahl- oder Aluminiumkolbens, der oder das mittels eines additiven oder generativen Fertigungsverfahrens hergestellt wird, zumindest teilweise einen Kühlkanal des Kolbens bildet.

10. Verfahren nach zumindest einem der Ansprüche 7 bis 9,
**dadurch gekennzeichnet, dass**
unterschiedliche Teile des erfindungsgemäßen Stahl- oder Aluminiumkolbens aus unterschiedlichen Stahl- bzw. Aluminiumwerkstoffen hergestellt werden.

## Claims

1. Steel or aluminium piston for a combustion engine with at least one cooling channel (14)
in which tongues (16, 22) extend both substantially in the direction of the piston axis and also in a substantially radial direction.

2. Steel or aluminium piston according to claim 1, **characterised in that**
the tongues (16) extending in the direction of the piston axis and the tongues (22) extending in a radial direction intersect.

3. Steel or aluminium piston according to claim 1 or 2,
**characterised in that** the tongues (22) extending in a radial direction reach from one limitation of the cooling channel (14) to the other.

4. Steel or aluminium piston according to one of the claims 1 to 3,
**characterised in that** the tongues extending in the direction of the piston axis simply extend from a base (18) of the cooling channel (14).

5. Steel or aluminium piston according to one of the preceding claims,
**characterised in that** the upper and/or lower limitation of the cooling channel is corrugated.

6. Steel or aluminium piston according to one of the preceding claims,
**characterised in that** the cross section of the cooling channel is enlarged in places and/or narrowed in places.

7. Method for producing at least a part of a steel or aluminium piston for a combustion engine with at least one cooling channel (14) in which tongues (16, 22) extend both substantially in the direction of the piston axis and also in a substantially radial direction by means of an additive or generative manufacturing method.

8. Method according to claim 7,
**characterised in that** the part or parts of the steel or aluminium piston is manufactured by means of 3D printing and/or selective metal laser melting and/or sintering.

9. Method according to claim 7 or 8,
**characterised in that** the part or parts of the steel or aluminium piston manufactured by means of an additive or generative manufacturing method at least partially forms a cooling channel of the piston.

10. Method according to at least one of the preceding claims 7 to 9, **characterised in that** different parts of the steel or aluminium piston according to the invention are manufactured from different steel or aluminium materials.

## Revendications

1. Piston en acier ou en aluminium pour un moteur à combustion avec au moins un canal de refroidissement (14),
dans lequel des ergots (16, 22) s'étendent aussi bien sensiblement dans la direction de l'axe du piston que sensiblement dans la direction radiale.

2. Piston en acier ou en aluminium selon la revendication 1,
**caractérisé en ce que**
les ergots (16) s'étendant dans la direction de l'axe du piston et les ergots (22) s'étendant dans la direction radiale se croisent.

3. Piston en acier ou en aluminium selon la revendication 1 ou 2,
**caractérisé en ce que**
les ergots (22) s'étendant dans la direction radiale ont une portée d'une limite du canal de refroidissement (14) à l'autre.

4. Piston en acier ou en aluminium selon l'une quelconque des revendications 1 à 3,
**caractérisé en ce que**
les ergots s'étendant dans la direction de l'axe du piston ne s'étendent qu'à partir d'un fond (18) du canal de refroidissement (14).

5. Piston en acier ou en aluminium selon l'une quelconque des revendications précédentes,
**caractérisé en ce que**
la limite supérieure et/ou inférieure du canal de refroidissement présente des ondulations.

6. Piston en acier ou en aluminium selon l'une quelconque des revendications précédentes,
**caractérisé en ce que**
la coupe transversale du canal de refroidissement est agrandie par endroits et/ou rétrécie par endroits.

7. Procédé de fabrication d'au moins une partie d'un piston en acier ou en aluminium pour un moteur à combustion avec au moins un canal de refroidissement (14), dans lequel les ergots (16, 22) s'étendent aussi bien sensiblement dans la direction de l'axe du piston que sensiblement dans la direction radiale, au moyen d'un procédé de fabrication additif ou génératif.

8. Procédé selon la revendication 7,
**caractérisé en ce que**
la pièce ou la partie du piston en acier ou en aluminium est fabriquée par impression 3D et/ou par fusion sélective par laser et/ou frittage de métaux.

9. Procédé selon la revendication 7 ou 8,
**caractérisé en ce que**
la pièce ou la partie du piston en acier ou en aluminium qui est fabriquée au moyen d'un procédé de fabrication additif ou génératif forme au moins partiellement un canal de refroidissement du piston.

10. Procédé selon au moins l'une quelconque des revendications 7 à 9,
**caractérisé en ce que**
les différentes parties du piston en acier ou en aluminium selon l'invention sont fabriquées à partir de différents matériaux en acier ou en aluminium.
